(19) Europäisches Patentamt
European Patent Office
Office européen des brevets

(11) EP 2 665 116 A1

(12) **EUROPEAN PATENT APPLICATION**
published in accordance with Art. 153(4) EPC

(43) Date of publication:
**20.11.2013 Bulletin 2013/47**

(21) Application number: **12734208.7**

(22) Date of filing: **12.01.2012**

(51) Int Cl.:
***H01M 4/62*** *(2006.01)*

(86) International application number:
**PCT/JP2012/050484**

(87) International publication number:
**WO 2012/096342 (19.07.2012 Gazette 2012/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2011 JP 2011003864**

(71) Applicant: **Plextronics, Inc.**
**Pittsburgh, PA 15238 (US)**

(72) Inventors:
- **OTAKA, Takeshi**
  **Kyoto-shi**
  **Kyoto 605-0995 (JP)**
- **YOSHIDA, Bunpei**
  **Kyoto-shi**
  **Kyoto 605-0995 (JP)**
- **WAKATSUKI, Atsushi**
  **Kyoto-shi**
  **Kyoto 605-0995 (JP)**
- **TAKEDA, Takuma**
  **Kyoto-shi**
  **Kyoto 605-0995 (JP)**

(74) Representative: **Lahrtz, Fritz**
**Isenbruck Bösl Hörschler LLP**
**Patentanwälte**
**Prinzregentenstrasse 68**
**81675 München (DE)**

# (54) ADDITIVE FOR POSITIVE ELECTRODES OF LITHIUM SECONDARY BATTERIES, AND POSITIVE ELECTRODE FOR LITHIUM SECONDARY BATTERIES

(57) Provided are: an additive for position electrodes, which is capable of increasing the output of a lithium secondary battery and is capable of maintaining cycle characteristics even during high-speed charge and discharge and a positive electrode for lithium secondary batteries. The additive is an additive for positive electrodes of lithium secondary batteries, which contains, as an essential constituent, a substituted polythiophene (P) that has a repeating unit (D), which is obtained by substituting a hydrogen atom in the 3-position and/or in the 4-position of a thiophene ring with at least one group (f) that in selected from the group consisting of a perfluoroalkylalkoxy group (f1), a perfluoroalkoxy group (f2), a perfluoroalkoxyalkyl group (f3) and an alkyl group (f4) substituted with the group (f1), as at least a part of a thiophene repeating unit.

EP 2 665 116 A1

**Description**

Technical Field:

The present invention relates to an additive for positive electrodes of a lithium secondary battery and a positive electrode material.

Background of the Invention:

There has recently been an urgent need for a high output of a lithium ion secondary battery in order to satisfy needs of electric cars. In general, two important elements are conceivable for increasing an output of a battery. One element is that electron conductivity is high in an electrode material, and the other is that the conductivity of lithium ions is high. When either one of them is lower, internal resistance of a battery increases such that sufficient output characteristics cannot be achieved. A section to be a main cause of the internal resistance is an electrode material where the reaction interface between ion conductivity and electron conductivity concentrates.

In general, the positive electrode material of a lithium ion secondary battery is constituted by binding a collector and an active material with a binder. As such binder, polyvinylidene fluoride with high binding strength is used. However, polyvinylidene fluoride has no electron conductivity, and therefore a conductivity assisting agent is blended as a countermeasure; conductivity is still insufficient, however. Moreover, it has no conductivity for lithium ions; therefore increased outputs can hardly be achieved.

It has been proposed to use a conductive high-molecular compound, such as polyaniline, as a conductivity assisting agent in order to improve the conductivity of a binder (see, e.g., Patent Literature 1). However, an electrode material in which polyaniline is used as a binder in Patent Literature 1 has problems that electrochemical stability is poor, and that storage stability and cycle characteristics are not sufficient.

In order to solve the abovementioned problems, an electrode material using polythiophene that excels in the electrochemical stability as a binder has been proposed, whereby storage stability and cycle characteristics have been improved (see, e.g., Patent Literature 2).

Prior Art Literature:

Patent Literature

[Patent Literature 1] Japanese Patent Application Laid-Open No. 2007-52940
[Patent Literature 2] Japanese Patent Application Laid-Open No. 2010-135310

Summary of the Invention

Problems to be Solved by the Invention

However, even though electrochemical stability, storage stability and cycle characteristics have been improved in the electrode material described in Patent Literature 2, there is some room for improvement in terms of voltage endurance and cycle characteristics at high temperatures.

The present invention has been accomplished in view of the abovementioned problems, and the objective of the present invention is to provide an additive agent for electrodes and an electrode material that enable to achieve high outputs of a lithium secondary battery and to maintain cycle characteristics even during high-rate charge/discharge.

Means for Solving the Problems

As a result of conducting intensive studies in order to achieve the abovementioned purpose, the present inventors came up with the present invention.

In other words, the present invention relates to: an additive for positive electrodes of a lithium secondary battery containing substituted polythiophene (P), as an essential component, having thiophene repeating units (D) (hereafter, referred to as repeating units (D)) where a hydrogen atom(s) at the 3-position and/or the 4-position are substituted by at least one type of groups (f) selected from the group consisting of groups from (f1) through (f4) represented by the following formulae (1) through (4) at least as a portion of the thiophene repeating units, (hereafter, referred to as an additive for positive electrodes of a lithium secondary battery (A), an additive for positive electrode (A) and an additive (A), as well); a positive

electrode for a lithium secondary battery containing the additive (A), an active material (B) and a collector (C); and a lithium secondary battery containing the additive (A).

$$-OR^1-R^2 \quad (1)$$

(wherein: $R^1$ represents a $C_{1-6}$ alkylene group; and $R^2$ represents a $C_{1-15}$ perfluoroalkyl group);

$$-O-R^3 \quad (2)$$

(wherein $R^3$ represents a $C_{1-15}$ perfluoroalkyl group);

$$-R^4-O-R^5 \quad (3)$$

(wherein: $R^4$ represents a straight or branched $C_{1-6}$ alkylene group; and $R^5$ represents a straight or branched $C_{1-15}$ perfluoroalkyl group); and

$$-R^6-OR^7-R^8 \quad (4)$$

(wherein: $R^6$ represents a straight or branched $C_{1-6}$ alkylene group; $R^7$ represents a $C_{1-6}$ alkylene group; and $R^8$ represents a $C_{1-15}$ perfluoroalkyl group).

[Effect of the Invention]

An additive for positive electrodes of a lithium ion secondary battery according to the present invention is effective in significantly enhancing the output characteristics of a battery as well as in dramatically improving cycle characteristics even during high-rate charge and discharge.

[Detailed Explanation of the Invention]

The additive (A) for positive electrodes of a lithium secondary battery according to the present invention contains a substituted polythiophene (P), as an essential component, having thiophene repeating units (D) where a hydrogen atom(s) of thiophene at the 3-position and/or the 4-position are substituted by at least one type of groups (f) selected from a group consisting of groups (f1) through (f4) represented by the formulae (1) through (4) above respectively. Furthermore, the elements listed marked with symbols (f1), (f2), (f3) and (f4) are also referred to as a perfluoroalkylalkoxy group (f1), a perfluoroalkoxy group (f2), a perfluoroalkoxyalkyl group (f3) and an alkyl group (f4) substituted by the abovementioned perfluoroalkylalkoxy group (f1), respectively.

The additive for positive electrodes of a lithium ion secondary battery (A) according to the present invention enables to carry out electron conductivity throughout the binder, which is conventionally performed via a contact point between a conductivity assisting agent and an active material, by containing substituted polythiophene (P) provided with electron conductivity and the conductivity of lithium ions, as an essential component.

Since the additive for positive electrodes (A) according to the present invention has the thiophene repeating units (D), lithium ion conductivity has been improved as compared with conventional binders. As a result, internal resistance and electric resistance can be significantly improved, resulting in enhanced output characteristics as well as enhanced cycle characteristics at high potential and temperature.

The abovementioned perfluoroalkylalkoxy group (f1) is exemplified by a perfluoroalkylalkoxy group having a $C_{1-6}$ oxyalkylene group, wherein one end is $C_{1-15}$ perfluoroalkyl group.

$R^1$ in the abovementioned general formula (1) is exemplified by a methylene group, an ethylene group, a propylene group, n-, sec- and iso-bytylene groups, a pentylene group, a hexylene group and 1,4-cyclohexylene group.

$R^2$ in the abovementioned general formula (1) is exemplified by a perfluoromethyl group, a perfluoroethyl group, a perfluoropropyl rgoup, a perfluoroisopropyl group, a perfluoro-n-, iso, secor tert-butyl group, a perfluoropentyl group, a perfluorohexyl group, a perfluoroheptyl group, a perfluorooctyl group, a perfluoro-2-ethylhexyl group, a perfluorononyl group, a perfluorodecyl group, a perfluoroundecyl group, a perfluorododecyl group, a perfluorotridecyl group, a perfluorotetradecyl group and a perfluoropentadecyl group.

Preferable compounds as (f1) are straight or branched $C_{1-6}$ perfluoroalkylethoxy groups, and more preferably straight or branched $C_{1-4}$ perfluoroalkylethoxy groups.

The abovementioned perfluoroalkoxy group (f2) is exemplified by $C_{1-15}$ perfluoroalkoxy groups.

$R^3$ in the abovementioned general formula (2) is exemplified by the same compounds as exemplified in the abovementioned $R^2$.

Preferable compounds as (f2) are exemplified by straight or branched $C_{1-6}$ perfluoroalkoxy groups, and more preferably straight or branched $C_{1-4}$ perfluoroalkoxy groups.

The abovementioned perfluoroalkoxyalkyl (f3) are exemplified by $C_{1-6}$ alkyl groups substituted by $C_{1-15}$ perfluoroalkoxy groups.

$R^4$ in the abovementioned general formula (3) are exemplified by a methylene group, an ethylene group, an n- or iso-propylene group, n-, sec-, iso- or tert-butylene group, a pentylene group, a hexylene group and 1,4-cyclohexylene group. $R^5$ in the abovementioned general formula (3) is exemplified by the same compounds as exemplified in the abovementioned $R^2$.

In preferable compounds as (f3), $R^4$ is straight or branched $C_{1-3}$ alkylene groups, and $R^5$ is straight or branched $C_{1-6}$perfluoroalkyl groups, and more preferably, $R^4$ is $C_{1-2}$ alkylene groups and $R^5$ is straight or branched $C_{1-4}$ perfluoroalkyl groups.

An alkylene group ($R^6$) of the general formula (4) in an alkyl group (f4) substituted by the abovementioned perfluoroalkylalkoxy group (f1) in the thiophene repeating unit (D) is exemplified by $C_{1-6}$ alkylene groups.

$R^6$ in the abovementioned general formula (4) are exemplified by the same compounds as exemplified in the abovementioned $R^4$.

$R^7$ in the abovementioned general formula (4) are exemplified by the same compounds as exemplified in the abovementioned $R^1$.

$R^8$ in the abovementioned general formula (4) are exemplified by the same compounds as exemplified in the abovementioned $R^2$.

In preferable compounds as (f4), $R^6$ is straight or branched $C_{1-3}$ alkylene groups, $R^7$ is an ethylene group, and $R^8$ is straight or branched $C_{1-6}$perfluoroalkyl groups, and more preferably $R^6$ is $C_{1-2}$ alkylene groups and $R^8$ is straight or branched $C_{1-4}$perfluoroalkyl groups.

The group (f), from the viewpoint of battery output characteristics, is preferably (f1), and is more preferably a 2,2,2-trifuluoro-etoxy group, a 2,2,3,3,3-pentafluoro-propoxy group, a 2,2,3,3,4,4,4-heptafluoro-butoxy group, a 2,2,3,3,4,4,5,5,5-nonafluoro-pentoxy group, a 3,3,3-trifluoro-1-propoxy group, a 4,4,4-trifluoro-1-butoxy group or a 5,5,5-trifluoro-1-pentoxy group.

The substituted polythiophene (P) according to the present invention may contain thiophene repeating units (F) substituted by at least one type of groups (h) selected from a group consisting of groups (h1) and (h2) represented by the following general formulae (10) and (11), respectively.

$$-(OR^9)_r-OR^{10} \qquad (10)$$

(wherein: r is an integer from zero to 5. $R^9$ is straight or branched $C_{2-4}$ alkylene groups; and $R^{10}$ is straight or branched $C_{1-12}$ alkyl groups).

$$-R^{11}-(OR^{12})_s-OR^{13} \qquad (11)$$

(wherein: s is an integer from zero to 5. $R^{12}$ is straight or branched $C_{2-4}$ alkylene groups; $R^{13}$ is straight or branched $C_{1-12}$ alkyl groups; and $R^{11}$ is straight or branched $C_{1-4}$ alkylene groups).

$OR^9$ and $OR^{12}$ in the abovementioned general formulae (10) and (11) independently represent an oxyethylene group, an oxypropylene group or an oxybutylene group, and are preferably am oxyethylene group in view of conductivity.

$R^{10}$ and $R^{13}$ in the abovementioned general formulae (10) and (11) are exemplified by a methyl group, an n- or iso-propyl group, an n-, iso-, sec- or tert-butyl group, an n- or iso-pentyl group, a cyclopentyl group, an n- or iso-hexyl group, a cyclohexyl group, an n- or iso-heptyl group, an n- or iso-octyl group, a 2-ehtylhexyl group, an n- or iso-nonyl group, an n- or iso-decyl group, an n- or iso-undecyl group and an n- or iso-dodecyl group.

When r is 1 or more in the general formula (10), $R^{10}$ is preferably straight or branched $C_{1-6}$ alkyl groups and more preferably straight or branched $C_{1-4}$ alkyl groups in view of conductivity. When r is zero, $R^{10}$ is preferably straight or branched $C_{3-12}$ alkyl groups, and more preferably straight or branched $C_{6-12}$ alkyl groups in view of conductivity.

When s is 1 or more in the general formula (11), $R^{13}$ is preferably straight or branched $C_{1-6}$ alkyl groups, and more preferably straight or branched $C_{1-4}$ alkyl groups in view of conductivity. When s is zero, $R^{13}$ is preferably straight or branched $C_{3-12}$ alkyl groups, and more preferably straight or branched $C_{6-12}$ alkyl groups in view of conductivity.

$R^{11}$ in the abovementioned general formula (11) is exemplified by an methylene group, a 1,2- or 1,3-propylene group and a 1,2-, 1,3-, 2,3- or 1,4-butylene group, and is preferably straight or branched $C_{1-3}$ alkylene groups, and more preferably $C_{1-2}$ alkylene groups in view of solvent solubility and conductivity.

In the abovementioned general formulae (10) and (11), r and s are independently an integer from zero to 5, respectively. In view of solvent solubility and conductivity, r is preferably 1-5 and more preferably 2-5. In view of solvent solubility and conductivity, s is preferably 0-4 and more preferably 0-3.

The content of the abovementioned thiophene repeating units (D) in the substituted polythiophene (P) is preferably 30-100 molar percent, more preferably 35-100 molar percent and particularly preferably 40-100 molar percent in view of solvent solubility.

The content of the thiophene repeating units (F) substituted by the group (h) in the substituted polythiophene (P) is preferably 0-50 molar percent, more preferably 10-40 molar percent and particularly preferably 10-30 molar percent in view of the voltage resistance and the cycle characteristics at higher temperature.

The substituted polythiophene (P) in the present invention may contain repeating units of usubstituted thiophene.

In the thiophene repeating units (D), groups binding to a thiophene ring at the 3-position and the 4-position are a combination of a hydrogen atom and the group (f), a combination of different groups (f) from each other, or a combination of a group (f) and a group (h).

In view of conductivity and solvent solubility, preferable thiophene repeating units (D) are a thiophene repeating unit (D1) represented by the following general formula (5), a thiophene repeating unit (D2) represented by the following general formula (6), a thiophene repeating unit (D3) represented by the following general formula (7) and a thiophene repeating unit (D4) represented by the following general formula (8). Substituted polythiophene having at least one type selected from a group consisting of (D1) through (D4) is referred to as (P1). In view of solvent solubility and easy synthesis, (P1) preferably contains 5-100 molar percent, more preferably for 60-100 molar percent and particularly preferably for 70-100 molar percent of (D1) or (D4).

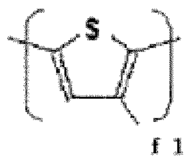

(5)

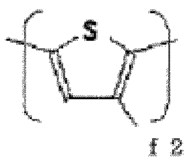

(6)

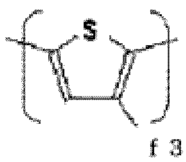

(7)

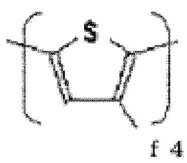

(8)

The substituted polythiophene (P) according to the present invention can be synthesized by any well-known methods including anion polymerization and oxidative polymerization of a monomer that is equivalent to each thiophene repeating unit.

The monomer that is equivalent to the substituted thiophene repeating unit (D) is exemplified by thiophene where the 3-position and/or the 4-position of a thiophene ring and/is substituted by a perfluoroalkylalkoxy group (f1), a perfluoroalkoxy group (f2), a perfluoroalkoxyalkyl group (f3) or an alkyl group (f4) substituted by the abovementioned perfluoroalkylalkoxy group (f1), and the 2-position and the 5-position are substituted by a halogen atom, respectively.

As specific examples of the monomer where the 3-position of a thiophene ring is substituted by the perfluoroalkylalkoxy group (f1), thiophenes below where the 2-position and the 5-position of thiophene (d1) are substituted by a halogen atom, respectively, are exemplified. As the thiophene (d1), 3-(3,3,4,4,5,5,6,6,6-nonafluoro-1-hexyloxy)thiophene, 3-(3,3,4,4,5,5,6,6,7,7,8,8,8,-tridecafluoro-1-octyloxy)thiophene, 3-(3,3,4,4,5,5,6,6,7,7,8,8,9,9,10,10,10-heptadecafluoro-1-decyloxy)thiophene, 3-(4,4,5,5,5-pentafluoro-1-pentyloxy)thiophene, 3-(4,4,5,5,6,6,7,7,7-nonafluoro-1-heptyloxy)thiophene, 3-(4,4,5,5,6,6,7,7,8,8,9,9,9-tridecafluoro-1-nonyloxy)thiophene, are 3-(4,4,5,5,6,6,7.7.8.8.9.9.10, 10,11,11,11-heptadecafluoro-1-undecyloxy)thiophene are exemplified.

As specific examples of the monomer where the 3-position of a thiophene ring is substituted by the perfluoroalkoxy group (f2), thiophenes below where the 2-position and the 5-position of thiophene (d2) are substituted by a halogen atom, respectively, are exemplified. As the thiophene (d2), 3-perfluoromethoxy thiophene, 3-perfluoroethoxy thiophene, 3-perfluoropropoxy thiophene, 3-perfluorobutoxy thiophene, 3-perfluoropentyloxy thiophene, 3-perfluorohexyloxy thiophene, 3-perfluoroheptyloxy thiophene, 3-perfluorooctyloxy thiophene, 3-perfluoroundecyloxy thiophene and 3-perfluorododecyloxy thiophene are exemplified.

As specific examples of the monomer substituted by the perfluoroalkoxyalkyl group (f3), thiophenes below where the 2-position and the 5-position of thiophene (d3) are substituted by a hydrogen atom, respectively, are exemplified. As the thiophene (d3), 3-perfluoro methoxymethyl thiophene, 3-perfluoro ethoxymethyl thiophene, 3-perfluoro propoxymethyl thiophene, 3-perfluoro butoxymethyl thiophene, 3-perfluoro pentyloxymethyl thiophene, 3-perfluoro hexyloxymethyl thiophene, 3-perfluoro heptyloxymethyl thiophene, 3-perfluoro octyloxymethyl thiophene, 3-perfluoro nonyloxymethyl thiophene, 3-perfluoro decyloxymethyl thiophene, 3-perfluoro undecyloxymethyl thiophene, 3-perfluoro dodecyloxymethyl thiophene, 3-perfluoro tridecyloxymethyl thiophene, 3-perfluoro tetradecyloxymethyl thiophene, 3-perfluoro pentadecyloxymethyl thiophene, 3-(2-perfluorohexyloxyethyl)thiophene, 3-(3-perfluoro hexyloxypropyl)thiophene and 3-(4-perfluoro heptyloxybutyl)thiophene are exemplified.

As specific examples of the monomer substituted by an alkyl group (f4) substituted by the abovementioned perfluoroalkylalkoxy group (f1), thiophenes below where the 2-position and the 5-position of thiophene (d4) are substituted by a halogen atom, respectively, are exemplified. As the thiophene (d4), 3-(4,4,5,5,5-pentafluoro-2-oxapentyl)thiophene, 3-(4,4,5,5,6,6,6-heptafluoro-2-oxahexyl)thiophene, 3-(5,5,6,6,7,7,8,8,8-nonafluoro-2-oxaoctyl)thiophene, 3-(5,5,6,6,7, 7,8,8,9,9,10,10,10-tridecafluoro-2-oxadecyl)thiophene, and 3-(5,5,6,6,7,7,8,8,9,9,10,10,11,11,12,12,12-heptadecafluoro-2-oxadodecyl)thiophene are execmplified.

As specific examples of the monomer where the 3-position and the 4-position of a thiophene ring are substituted by the group (f), thiophenes below where the 2-position and the 5-position of thiophene (d5) are substituted by a halogen atom, respectively, are exemplified. As the thiophene (d5), 3-(4,4,5,5,6,6,7,7,7-nonafluoro-1-heptyloxy)-4-perfluoroethoxy thiophene, 3-perfluoroethoxymethyl-4-(4,4,5,5,5-pentafluoro-2-oxapentyl)thiophene and 3-(4,4,5,5,6,6,7,7, 8,8,9,9,9-tridecafluoro-1-nonyloxy)-4-(5,5,6,6,7,7,8,8,9,9,10,10,10-tridecafluoro-2-oxadecyl)thiophene are exemplified.

The monomer that is equivalent to the unsubstituted thiophene repeating unit is exemplified by thiophene where the 2-position and the 5-position are substituted by a halogen atom, respectively.

The monomer that is equivalent to the thiophene repeating unit (F) substituted by the group (h) is exemplified by 3-hexyloxy thiophene, 3-(2,5-dioxaheptyl)thiophene or 3-(1,3-dioxapentyl)-4-methoxy thiophene where the 2-position and the 5-position are substituted by a halogen atom, respectively.

Regioregularity (RR) of the substituted polythiophene (P) according to the present invention is usually 50% or more, and is preferably 80% or more in view of conductivity, and more preferably 90% or more. Furthermore, RR is based upon the substituent (f), and it is applied when groups bound to the 3-position and the 4-position of a thiophene ring in the substituted polythiophene (P) are a combination of a hydrogen atom and the group (f), a combination of different groups (f) from each other, a combination of the group (f) and the group (h) or a combination of a group (f) and a group (g) to be described later.

The regioregularity (RR) according to the present invention is defined as follows:
As types of the substituted polythiophene (P), as shown in the following general formulae indicating the combination of a hydrogen atom and the group (f), there are four types: an HT-HT bond (B1), a TT-HT bond (B2), an HT-HH bond (B3) and a TT-HH bond (B4), as typical examples. Furthermore, herein, HT, TT and HH are abbreviations of head to tail, tail to head and head to head, respectively.

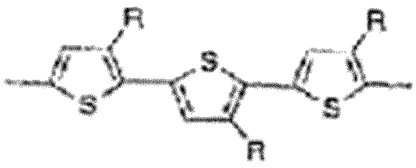

HT-HT bond (B1)

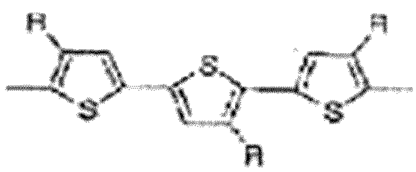

TT-HT bond (B2)

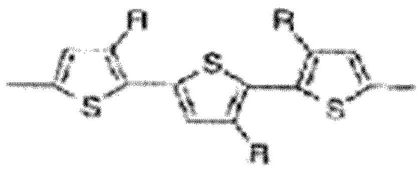

HT-HH bond (B3)

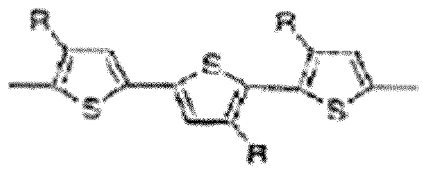

TT-HH bond (B4)

In the abovementioned four binding types of chemical formulae, R represents a perfluoroalkylalkoxy group (f1), a perfluoroalkoxy group (f2), a perfluoroalkoxyalkyl group (f3) or an alkyl group (f4) substituted by the abovementioned perfluoroalkylalkoxy group (f1).

The regioregularity (RR) according to the present invention is defined as a ratio (%) of HT-HT bonds (head-to-tail-head-to-tail bond) to the substituted polythiophene (P), and is calculated by the following mathematical formula (1):

$$\text{Regioregularity (RR)} = b1 \times 100/(b1 + b2 + b3 + b4) \qquad (1)$$

(wherein, b1 represents the number of HT-HT bonds; b2 represents the number of TT-HT bonds; b3 represents the number of HT-HH bonds; and b4 represents the number of TT-HH bonds).

Specifically, since protons in each of these bonds show a unique chemical shift ($\delta$) with the nuclear magnetic resonance method ($^1$H-NMR), respectively, RR can be calculated from integral values of chemical shifts corresponding to the four types of bonds. In the case of substituted polythiophene having the thiophene repeating unit (D1) represented by the general formula (5), chemical shifts are specifically as follows: B1: $\delta$ = 6.98, B2: $\delta$ = 7.00, B3: $\delta$ = 7.02, and B4: $\delta$ = 7.05. Accordingly, integral values S1, S2, S3 and S4 at chemical shifts unique to B1, B2, B3 and B4 are calculated, respectively, and the regioregularity (RR) is calculated using the following mathematical formula (2) is calculated from a ratio (%) of the integral value S1 at the chemical shift unique to B1 as compared with the sum of integral values:

$$\text{Regioregularity (RR)} = S1 \times 100/(S1 + S2 + S3 + S4) \qquad (2)$$

As described above, although the substituted polythiophene (P) becomes solvent-soluble because of having the thiophene repeating units (D1), (D2), (D3) or (D4), because affinity with water is increased by further introducing a sulfonium group (g) represented by the following general formula (9) into one or more thiophene repeating unit(s) in (P), this (P) can be water-dispersible substituted polythiophene (P2). As a preferred example of such substituted polythiophene (P), substituted polythiopenes (P2) having at least one type of thiophene repeating units (E) selected from a group consisting of thiophene repeating units (E1) through (E4) represented by general formulae (12) through (15), respectively, and the thiophene repeating unit (D).

$$-SO_3^-M^+ \qquad (9)$$

(wherein, $M^+$ is an alkali metal cation or proton.)

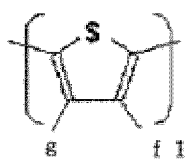

(12)

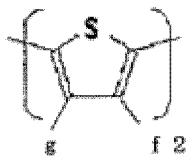

(13)

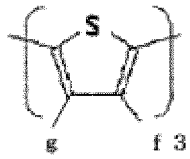

(14)

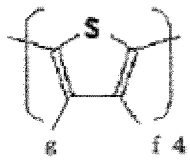

(15)

$M^+$ in the general formula (9) represents an alkali metal ion (e.g., a lithium ion, a sodium ion and a potassium ion) or proton. $M^+$ is preferably an alkali metal cation in view of water dispersibility, and is more preferably a lithium ion in view of electrolytic stability.

The substituted polythiphene (P2) having the thiophene repeating unit (D) and the thiophene repeating unit (E) can be produced by sulfonating a substituted polythiophene (P1) with a sulfonating reagent. As the sulfonating agent, monochlorosulfuric acid, fuming sulfuric acid and concentrated sulfuric acid can be exemplified, but not limited these.

The content of the thiophene repeating unit (E) in the substituted polythiphene (P2) is usually 5-70 molar percent, preferably 30-60 molar percent and more preferably 50-60 molar percent in view of water dispersibility, conductivity and easy synthesis.

The content of the thiophene repeating unit (D) in the substituted polythiphene (P2) is usually 30-95 molar percent, preferably 40-70 molar percent and more preferably 40-50 molar percent in view of water dispersibility, conductivity and easy synthesis.

As the substituted polythiophene (P) according to the present invention, what is preferable in view of conductivity is the substituted polythiophene (P1), and what is preferable in view of environmental burdens not to use an organic solvent is the substituted polythiophene (P2).

The additive (A) according to the present invention may be mixed with a high-molecular compound for assisting binding strength and/or a conductivity assisting agent as needed. On the occasion of using a high-molecular compound for assisting binding strength, if the substituted polythiophene (P) is dissolved into an organic solvent to be described below, a high-molecular compound that is soluble in an organic solvent can be mixed, or if the substituted polythiophene (P) is dispersed in water, a water-soluble high-molecular compound can be mixed.

The high-molecular compound that is soluble in organic solvents is exemplified, for example, by polyethylene, polypropylene, polytetrafluoroethylene (PTFE), polyvinylidene fluoride, tetrafluoroethylene - hexafluoroethylene copolymers, tetrafluoroethylene - hexafluoropropylene copolymers (FEP), tetrafluoroethylene - perfluoroalkyl vinyl ether copolymers (PFA), vinylidene fluoride - hexafluoropropylene copolymers, vinylidene fluoride - chlorotrifluoroethylene copolymers, ethylene - tetrafluoroethylene copolymers (ETFE resin), polychlorotrifluoroethylene (PCTFE), vinylidene fluoride - pentafluoropropylene copolymers, propylene - tetrafluoroethylene copolymers, ethylene - chlorotrifluoroethylene copolymers (ECTFE), vinylidene fluoride - hexafluoropropylene - tetrafluoroethylene copolymers and vinylidene fluoride - perfluoromethyl vinyl ether - tetrafluoroethylene copolymers. Among them, polyvinylidene fluoride (PVDF) and polytetrafluoroethylene (PTFE) are particularly preferable in view of dispersibility of the substituted polythiophene (P) in high-molecular compounds.

The water-soluble high-molecular compound is exemplified, for example, by cellulose derivatives, poly(metha) acrylic acids, polyvinyl alcohol, polyvinyl sulfonic acid, polyvinylidene fluoride, polyvinylpyrrolidone, polyethylene oxide, polyacrylamide, poly-N-isopropylacrylamide, poly-N,N-dimethylacrylamide, polyoxyethylene and polyethyleneimine.

In particular, cellulose derivatives are exemplified by carboxymethylcellulose (including Li salts, Na salts, K salts or $NH_4$ salts), methylcellulose, ethylcellulose, hydroxymethylcellulose, hydroxyethylcellulose, cellulose acetate butyrate, oxidized starch and phosphorylated starch.

Poly(metha) acrylic acids include homopolymers of (metha) acrylic acid, copolymers between (metha) acrylic

acid and itaconic acid and/or maleic acid and Li salts, Na salts, K salts or $NH_4$ salts thereof.

Among them, cellulose derivatives are preferable, carboxymethylcelluloses are more preferable, and carboxymethylcellulose salt is particularly preferable.

The content of a high-molecular compound for assisting binding strength in the additive (A) is usually 0-80 percent by weight and preferably 1-50 percent by weight. If the content of a high-molecular compound is too high, it is not preferred because outputs decline.

Conductivity assisting agents that can be mixed into the additive (A) according to the present invention are not particularly limited as far as they are electron conductive materials that do not cause chemical changes at the charging/discharging potential of a positive electrode material to be used. The conductivity assisting agents are exemplified by, for example,: graphites, such as natural graphite (e.g., squamous graphite) or artificial graphite; carbon blacks, such as acetylene black, ketjen black, channel black, furnace black and lamp black or thermal black; conductive fibers, such as carbon nano tube, carbon fiber or metal fiber; metal powders, such as carbon fluoride, copper, nickel, aluminum or silver; conductive whiskers, such as zinc oxide or potassium titanate; conductive metal oxides, such as titanium oxide; organic conductive materials, such as polyphenylene derivatives; and mixtures thereof. Among these conductive agents, artificial graphite, acetylene black and nickel powder are particularly preferable.

The content of a conductivity assisting agent in the additive (A) is not particularly limited, but is preferably 1-50 percent by weight and more preferably 1-30 percent by weight. The content of carbon or graphite is particularly preferably 2-15 percent by weight.

The positive electrodes for a lithium secondary battery according to the present invention contain the additive (A), an active material (B) and a collector (C).

The positive electrodes for a lithium secondary battery according to the present invention can be obtained by kneading the additive (A), the active material (B) and a solvent, and then by applying this kneaded material onto the collector (C) and drying it.

Specifically, the additive (A) and the active material (B) are mixed at a desired ratio, and then a solvent is added to this mixture to produce a slurry kneaded material. The obtained kneaded substance is applied to the collector (C), such as an aluminum foil, dried and then pressed at predetermined pressure as needed to make electrode materials. Furthermore, drying temperature on the occasion of drying the kneaded substance is preferably 100-150°C and more preferably 120-140°C. If the drying temperature is lower than 100°C, an amount of the solvent remaining in an electrode material may increase, resulting in adverse influence on the characteristics of a battery. If it exceeds 150 °C, the additive (A) is apt to be decomposed (carbonized), which may also lead to adverse influence on the characteristics of a battery.

As the active material (B), lithium transition metal complex oxides can be used including, for example, $Li_xFePO_4$, $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$ and $Li_xMn_{2-y}O_4$ (wherein, M is at least one type of atoms selected from Na, Mg, Sc, Y, Mn, Fe, Co, Ni, Cu, Zn, Al, Cr, Pb, Sb and B; x is a number from 0 to 1.2; y is a number from 0 to 0.9; and z is a number from 2.0 to 2.3). Herein, the value of the abovementioned x is a value before starting charging and discharging and increases or decreases as a result of charging and discharging. Among them, $Li_xFePO_4$ or $Li_xCoO_2$ is preferable in view of costs, and $Li_xFePO_4$ is particularly preferable in view of safety where the material will not generate heat or be decomposed at higher temperature of 160 degrees or above).

The content of the additive (A) with regard to the active material (B) in the present invention is usually 1-20 percent by weight, preferably 3-10 percent by weight and more preferably 3-5 percent by weight. If the amount of the additive is too small, the active material cannot sufficiently be glued; if it is too large, it is not preferable because the energy density of a battery declines.

A solvent used for kneading the additive (A) and the active material (B) according to the present invention is preferably an organic solvent with less than 150 °C of a boiling point when the substituted polythiophene (P) contained in the additive (A) is the substituted polythiophene (P1), and is preferably water when the substituted polythiophene (P) is the substituted polythiophene (P2).

As an organic solvent, ones with less than 150 °C of boiling point are preferable. If the boiling point is 150 °C or above, the amount of the solvent remaining in an electrode material may become increased during the drying process, thereby exerting adverse influence on the characteristics of a battery. Such organic solvents include 1-mthyl-2-pyrrolidone, dimethylformamide, chloroform, tertahydrofuran (hereinafter, abbreviated to as THF), 1,3-dioxolane, 1,4-dioxolane and toluene. Among them, 1-mthyl-2-pyrrolidone and 1,3-dioxolane are preferable in view of the solubility of the substituted polythiophene (P).

The amount of a solvent used for producing positive electrodes according to the present invention is 50-300 percent by weight and preferably 50-100 percent by weight relative to an active material (B). If the amount of a solvent is too small, the active material (B) and the additive (A) cannot sufficiently be kneaded. If it is too large, the amount of the solvent remaining in an electrode material may become large, thereby exerting adverse influence on the characteristics of a battery; thus, it is not preferable, either.

The collector (C) used in the present invention is not particularly limited as far as it is an electronic conductor that does not cause chemical changes at the charging/discharging potential of a positive electrode material to be used.

By way of example, the material includes stainless steel, aluminum, titanium, carbon and conductive resin as well as aluminum or stainless steel whose surface is treated with carbon or titanium. Among them, aluminum and aluminum alloys are particularly preferable. These materials may be used after oxidizing their surface, as well. Moreover, it is desirable to make the surface of a current collector uneven by surface treatment.

As to the shape of the collector (C), other than foils, molded products, such as films, sheets, nets, punched materials, lath bodies, porous bodies, foams, fiber groups or non-woven bodies, are exemplified.

The thickness of the collector is not particularly limited, but is preferably 1-500μm.

Using such positive electrodes enable to obtain the lithium secondary battery of the present invention.

Examples:

A description of the present invention is given below in more detail with reference to examples and comparative examples; however, the present invention is not particularly limited to those examples. As used herein, the term "parts" refers to parts by weight.

<Production Example 1>

Synthesis of poly{3-(4,4,5,5,6,6,7,7,7-nonafluoro-1-heptyloxy)thiophene} (P1-1):

(1) Synthesis of 3-(4,4,5,5,6,6,7,7,7-nonafluoro-1-heptyloxy)thiophene

Sodium hydride (60 % paraffin dispersion) (2.41 parts) was dispersed into 7 parts of N,N-dimethylformamide, and then 15.92 parts of 3,3,4,4,5,5,6,6,6-nonafluoro-1-hexanol [manufactured by Aldrich) were instilled. The reaction solution foamed and became clouded. After the foaming subsided, 4.91 parts of 3-bromothiophene (manufactured by Aldrich) and 0.115 parts of copper iodide (I) were added sequentially to the reaction solution.

The reaction solution was heated to 110 °C and then reacted for 2 hours. After the reaction was completed, [the solution] was cooled to room temperature, 30 parts of 1M ammonium chloride aqueous solution were added, and after [the mixed solution] was transferred to a separatory funnel using 30 parts of ethyl acetate, an aqueous layer was separated. After an organic layer was further washed with 30 parts of distilled water twice, ethyl acetate was distilled away, and then 9.39 parts of 3-(4,4,5,5,6,6,7,7,7-nonafluoro-1-heptyloxy)thiophene were obtained.

(2) Synthesis of 2,5-dibromo-3-(4,4,5,5,6,6,7,7,7-nonafluoro-1-heptyloxy)thiophene:

The above-mentioned 3-(4,4,5,5,6,6,7,7,7-nonafluoro-1-heptyloxy)thiophene (9.39 parts) and 9.90 parts of N-bromosuccinimide were dissolved into 30 parts of THF and [the obtainment] was reacted at room temperature for 2 hours. Precipitates were removed with a glass filter using 50 parts of ethyl acetate, and then THF and ethyl acetate were distilled away. The obtained mixture was purified using a silica gel column, and then 10.80 parts of 2,5-dibromo-3-(4,4,5,5,6,6,7,7,7-nonafluoro-1-heptyloxy)thiophene (yield 79%) were obtained.

(3) Synthesis of poly{3-(4,4,5,5,6,6,7,7,7-nonafluoro-1-heptyloxy)thiophene} (P1-1):

After 10.80 parts of the above-mentioned 2,5-dibromo-3-(4,4,5,5,6,6,7,7,7-nonafluoro-1-heptyloxy)thiophene were dissolved into 30 parts of THF, 21.21 parts of a methyl magnesium bromide in THF solution was added, and then [the mixture] was reacted at 75 °C for 30 minutes.

Addition of 0.116 parts of [1,3-bis(diphenylphosphino)propane]-dichloronickel (II) to the reaction solution was conducted and [the mixed solution] was reacted for two more hours by maintaining the temperature at 75 °C.

After the reaction solution was cooled to room temperature, 5 parts of methanol were added. The reaction mixture was transferred to a Soxhlet extractor, and then it was washed with 150 parts of methanol, 150 parts of chloroform and 150 parts of acetone sequentially. Finally, residues were extracted with 150 parts of 1-methyl-2-pyrrolidone and then the solvent was distilled away and 2.95 parts of poly{3-(4,4,5,5,6,6,7,7,7-nonafluoro-1-heptyloxy)thiophene} (P1-1) (yield 40 %; total yield 28 %) were obtained. The regioregularity calculated by the abovementioned method using $^{1}$H-NMR was 96.3%.

<Production Example 2>

Synthesis of poly[3-(4,4,5,5,6,6,7,7,8,8,9,9,9-tridecafluoro-1-nonyloxy)thiophene] (P1-2):

As similar to Production Example 1 except for using 20.23 parts of 3,3,4,4,5,5,6,6,7,7,8,8,8-tridecafluoro-1-octanol (manufactured by Tokyo Chemical Industry Co., Ltd.) instead of 15.92 parts of 3,3,4,4,5,5,6,6,6-nonafluoro-1-hexanol, 3.05 parts (total yield 25 %) of poly[3-(4,4,5,5,6,6,7,7,8,8,9,9,9-tridecafluoro-1-nonyloxy)thiophene] (P1-2) where the regioregularity was 95.6% were obtained.
Furthermore, on the occasion of changing 3,3,4,4,5,5,6,6,6-nonafluoro-1-hexanol into 3,3,4,4,5,5,6,6,7,7,8,8,8-tridecafluoro-1-octanol, an amount of each raw material was adjusted so as to equalize the molar ratios of reaction components and the weight ratios of non-reaction components (e.g., solvents) to those in Production Example 1 for operation. This process was similarly conducted in Production Examples 3,5-7 and 9-11, as well.

<Production Example >

Synthesis of poly{3-(4,4,5,5,6,6,7,7,8,8,9,9,10,10,11,11,11-heptadecafluoro-1-undecyloxy)thiophene} (P1-3):

As similar to Production Example 1 except for using 15.92 parts of 3,3,4,4,5,5,6,6,6-nonafluoro-1-hexanol instead of 23.55 parts of 3,3,4,4,5,5,6,6,7,7,8,8,9,9,10,10,10-heptadecafluoro-1-decanol (manufactured by Tokyo Chemical Industry Co., Ltd.), 3.51 parts (total yield 25 %) of poly{3-(4,4,5,5,6,6,7,7,8,8,9,9,10,10,11,11,11-heptadecafluoro-1-undecyloxy)thiophene} (P1-3) where the regioregularity was 96.6% were obtained.

<Production Example 4>

Synthesis of poly{3-(4,4,5,5,6-pentafluoro-2-oxapentyl)thiophene} (P1-4):

(1) Synthesis of 3-bromomethyl thiophene:

After dissolving 5 parts (50.9 mmol) of 3-methylthiophene (manufactured by Tokyo Chemical Industry Co., Ltd.), 9.97 parts (56.0 mmol) of N-bromosuccinimide and 0.12 parts (0.50 mmol) of dibenzoylperoxide (manufactured by Tokyo Chemical Industry Co., Ltd.) into 30 parts of benzene, the temperature was increased to 100 °C and then [the mixed solution] was reacted for 4 hours. After the reaction was completed, the temperature was cooled to room temperature, and after 30 parts of 1M sodium thiosulfate solution were added and [the mixure] was transferred to a separatory funnel, an aqueous layer was separated. After the organic layer was further washed with 30 parts of distilled water twice, benzene was distilled away and 6.32 parts (35.7 mmol) of 3-bromomethylthiophene (yield 70.1 %) were obtained.

(2) Synthesis of 3-(4,4,5,5,5-pentafluoro-2-oxapentyl)thiophene:

Dissolution of 5.89 parts (39.3 mmol) of 2,2,3,3,3-pentafluoro-1-propanol into 15 parts of THF was conducted, and 1.57 parts (39.3 mmol) of sodium hydride (60 % paraffin dispersion) were added to the mixed solution. After 6.32 parts (35.7 mmol) of the abovementioned 3-bromomethylthiophene were dissolved into 15 parts of THF and [the mixture] was instilled for 2 hours, the temperature was increased to 100 °C and [the mixture] was reacted for 4 hours. After the reaction was completed, the solution was cooled to room temperature, and 30 parts of distilled water was added and [the mixture] was transferred to a separatory funnel, an aqueous layer was separated. After the organic layer was further washed with 30 parts of distilled water twice, THF was distilled away and the obtained mixture was obtained by a silica gel column, and then 7.47 parts (30.35 mmol) of 3-(4,4,5,5,5-pentafluoro-2-oxapentyl)thiophene (yield 85%) were obtained.

(3) Synthesis of 2,5-dibromo-3-(4,4,5,5,6-pentafluoro-2-oxapentyl)thiophene:

Dissolution of 7.47 parts (30.35 mmol) of the abovementioned 3-(4,4,5,5,5-pentafluoro-2-oxapentyl)thiophene and 11.07 parts (62.2 1 mmol) of N-bromosuccinimide into 30 parts of THF was conducted, and then [the mixture] was reacted at room temperature for 2 hours.
Precipitates were removed with a glass filter using 50 parts of ethyl acetate and then THF and ethyl acetate were distilled away. The obtained mixture was purified by a silica gel column, and then 9.44 parts (23.37 mmol) of 2,5-dibromo-3-(4,4,5,5,6-pentafluoro-2-oxapentyl)thiophene (yield 77%) were obtained.

(4) Synthesis of poly {3-(4,4,5,5,6-pentafluoro-2-oxapentyl)thiophene}:

After dissolving 9.44 parts (23.37 mmol) of the abovementioned 2,5-dibromo-3-(4,4,5,5,6-pentafluoro-2-oxapentyl)thiophene into 30 parts of THF, 23.14 parts (23.37 mmol) of a methyl magnesium bromide in THF solution were added and [the mixture] was reacted at 75 °C for 30 minutes. Addition of 0.127 parts (0.234 mmol) of [1,3-bis(diphenylphosphino)propane]-dichloronickel (II) to the reaction solution was conducted, and then [the mixture] was reacted for

2 hours by maintaining the same temperature at 75 °C. After the reaction solution was cooled to room temperature, 5 parts of methanol were added. The reaction mixture was transferred to a Soxhlet extractor and then washed with 150 parts of methanol, 150 parts of chloroform and 150 parts of acetone sequentially. Finally, residues were extracted with 150 parts of 1-methyl-2-pyrrolidone and the solvent was distilled away, and then 2.28 parts of poly {3-(4,4,5,5,6-pentafluoro-2-oxapentyl)thiophene} (P1-4) where the regioregularity was 96.7% (yield 40 %; total yield 18%) were obtained.

<Production Example 5>

Synthesis ofpoly{3-(4,4,5,5,6,6,6-heptafluoro-2-oxahexyl)thiophene} (P1-5):

As similar to Production Example 4 except for using 7.86 parts of 2,2,3,3,4,4,4-heptafluoro-1-butanol (manufactured by Tokyo Chemical Industry Co., Ltd.) instead of 5.89 parts of 2,2,3,3,3-pentafluoro-1-propanol, 2.51 parts of (P1-5) where the regioregularity was 97.4% were obtained (total yield 17%).

<Production Example 6>

Synthesis ofpoly{3-(5,5,6,6,7,7,8,8,8-nonanuoro-2-oxaoctyl)thiophene} (P1-6):

As similar to Production Example 4 except for using 10.37 parts of 3,3,4,4,5,5,6,6,6-nonafluoro-1-hexanol instead of 5.89 parts of 2,2,3,3,3-pentafluoro-1-propanol, 2.97 parts of (P1-6) where the regioregularity was 95.9% were obtained (total yield 16%).

<Production Example 7>

Synthesis of poly{3-(5,5,6,6,7,7,8,8,9,9,10,10,10-tridecafluoro-2-oxadecyl)thiophene (P1-7):

As similar to Production Example 4 except for using 14.30 parts of 3,3,4,4,5,5,6,6,7,7,8,8,8-tridecafluoro-1-octanol instead of 5.89 parts of 2,2,3,3,3-pentafluoro-1-propanol, 3.79 parts of (P1-7) where the regioregularity was 95.8% were obtained (total yield 16%).

<Production Example 8>

Synthesis of sulfonated poly{3-(4,4,5,5,6,6,7,7,7-nonafluoro-1-heptyooxy)thiophene} lithium salts (P2-1):

(1) Synthesis of sulfonated poly {3-(4,4,5,5,6,6,7,7,7-nonafluoro-1-heptyooxy)thiophene}:

Mixing of 180 parts of fuming sulfuric acid into 2.95 parts of (P1-1) obtained in Production Example 1, and then [the mixture] was reacted at 85 °C for 24 hours. After the reaction mixture was diluting with 6,000 parts of distilled water, [the mixture] was stilled at room temperature for 1 hour for dispersion. Dispersions were precipitated using a centrifuge, and after a supernatant was removed, [residues] were washed with 800 parts of distilled water using a centrifuge twice. The obtained precipitates are placed in 6,000 parts of distilled water and the precipitates were dispersed by irradiating supersonic for 30 minutes.
After the obtained dispersion liquid was passed through a column filled with 30 parts of ion exchange resin (Amber jet 4400 manufactured by Aldrich) and sulfonic acid was removed, water was distilled away under reduced pressure and then 3.16 parts of sulfonated poly {3-(4,4,5,5,6,6,7,7,7-nonafluoro-1-heptyooxy)thiophene} were obtained (yield 96%).

(2) Synthesis of sulfonated poly{3-(4,4,5,5,6,6,7,7,7-nonafluoro-1-heptyooxy)thiophene} lithium salts:

After dispersing 3.16 parts of the abovementioned sulfonated poly{3-(4,4,5,5,6,6,7,7,7-nonafluoro-1-heptyooxy) thiophene} into 50 parts of distilled water, 0.60 parts of lithium carbonate were added and then [the mixture] was reacted at room temperature for 1 hour. The reaction mixture was exposed to a vacuum and water was distilled away, and then 3.19 parts of sulfonated poly{3-(4,4,5,5,6,6,7,7,7-nonafluoro-1-heptyooxy)thiophene} lithium salts (P2-1) were obtained (yield 99 %; total yield 95 %).
As a result of analyzing sulfonated poly {3-(4,4,5,5,6,6,7,7,7-nonafluoro-1-heptyooxy)thiophene} lithium salts with NMR, the content of the thiophene repeating unit (D1) was 49 molar percent, and the content of the thiophene repeating unit (E1) was 51 molar percent.

<Production Example 9>

Synthesis of sulfonated poly {3-(4,4,5,5 ,6-pentafluoro-2-oxapentyl)thiophene} lithium salts (P2-2):

As similar to Production Example 8 except for using 2.28 parts of (P1-4) obtained in Production Example 4 instead of 2.95 parts of (P1-1), 2.46 parts of sulfonated poly{3-(4,4,5,5,6-pentafluoro-2-oxapentyl)thiophene} lithium salts (P2-2) were obtained (total yield 91 %). As a result of analyzing obtained sulfonated poly{3-(4,4,5,5,6-pentafluoro-2-oxapentyl)thiophene} lithium salts by NMR, the content of the thiophene repeating unit (D4) was 52 molar percent, and the content of the thiophene repeating unit (E4) was 48 molar percent.

<Comparative Production Example 10>

Synthesis ofpoly(3-hexyloxythiophene) (P'-1):

As similar to Production Example 1 except for using 10.65 parts of 1-hexanol in place of 15.92 parts of 3,3,4,4,5,5,6,6,6-nonafluoro-1-hexanol instead of 15.92 parts of 3,3,4,4,5,5,6,6,6-nonafluro-1-hexanol, 2.85 parts of poly (3-hexyloxythiophene) (Comparative P-8) where the regioregularity was 96.7 % were obtained (total yield 30 %).

<Comparative Production Example 11>

Synthesis of sulfonated poly(3-hexyloxythiophene) lithium salts (P'-2):

As similar to Production Example 8 except for using 2.85 parts of (P'-1) obtained in Production Example 10 instead of 2.95 parts of (P1-1), 3.23 parts of sulfonated poly(3-hexyloxythiophene) lithium salts (P'-2) were obtained (total yield 91%). As a result of analyzing the obtained sulfonated poly(3-hexyloxythiophene) lithium salts by NMR, the content of the thiophene repeating unit (F) was 52 molar percent, and the content of the thiophene repeating unit (E) was 48 molar percent.

<Production Example 12>

Production of negative electrodes:

Mixing 92.5 parts of graphite powder with approximately 8-12 μm of average particle size, 7.5 parts of polyvinylidene fluoride and 200 parts of 1-methyl-2-pyrrolidone [manufactured by Tokyo Chemical Industry Co., Ltd.] in a mortar, and a slurry was obtained. The obtained slurry was applied to one face of a copper foil with 20 μm of thickness, and after the copper foil was dried at 100 °C for 15 minutes and a solvent was evaporated, the foil was punched out to 12 mmφ and then the foil was pressed to 30 μm of thickness using a press machine and negative electrodes were obtained.

< Production Example 13 >

Preparation of lithium secondary battery electrolyte:

$LiPF_6$ was dissolved into a mixed solvent of ethylene carbonate, diethyl carbonate and vinylene carbonate with a ratio by weight of 48.5:48.5:3, and an electrolyte solution was prepared sp as to be 1 mol/L.

Examples 1-14 and Comparative Examples 1-5

<Preparation of Additive>

Additives for each of Examples 1-14 and Comparative Examples 1-5 were prepared by mixing substituted polythiophene obtained in the abovementioned Production Examples 1-11, polyvinylidene fluoride as a binding strength assisting high-molecular compound, carboxymethylcellulose and polyanilinesulfonic acid with a ratio by weight shown in Tables 1 and 2, respectively.

<Production of Electrode>

Thorough kneading of 0.25 parts of the additives for Examples 1-10, 13 and 14 and Comparative Examples 1, 2, 4 and 5, 9.5 parts of $LiFePO_4$ powder, 0.25 parts of acetylene black (manufactured by DENKA DENKI KAGAKU

KOGYO KABUSHIKI KAISHA, average particle size: 1.0 μm) and 7.0 parts of 1-methyl-2-pyrrolidone [manufactured by Tokyo Chemical Industry Co., Ltd.] in a mortar to obtain slurry was conducted, and slurries for Examples 1-10, 13 and 14 and Comparative Examples 1, 2, 4 and 5 were obtained, respectively.
The obtained slurry was applied onto one face of an aluminum electrolytic foil collector with 20μm of thickness using a wire coating bar in the atmosphere, and the collector was dried at 100 °C for 15 minutes, it was further dried at 80 °C for 5 minutes under reduced pressure (10 mmHg) to form a layer constituted of an active material and the additive with 10 μm of thickness, and positive electrodes with 30 μm of entire film thickness.

[Table 1]

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Blend ratio of additive components | Substituted polythiophene (P) | Type | (P1-1) | (P1-1) | (P1-2) | (P1-1) | (P1-2) | (P1-3) | (P1-4) | (P1-5) | (P1-6) | (P1-7) |
| | | Usage | 100% | 67% | 67% | 5% | 5% | 5% | 5% | 5% | 5% | 5% |
| | Binding strength assisting high-molecular compound | Polyvinylidene fluoride | - | 33% | 33% | 45% | 45% | 45% | 45% | 45% | 45% | 45% |
| | | Carboxymethylcellulose | - | - | - | - | - | - | - | - | - | - |
| | | Polyaniline-sulfonic acid | - | - | - | - | - | - | - | - | - | - |
| | Conductive auxiliary agent | Acetylene black | - | - | - | 50% | 50% | 50% | 50% | 50% | 50% | 50% |
| Performance assessment | Binding strength (%) | | 96 | 97 | 97 | 99 | 98 | 98 | 99 | 98 | 99 | 98 |
| | Dispersibility of substituted polyethiophene in polyvinylidene fluoride (dispersion particle size (nm)) | | 510 | 510 | 530 | 510 | 530 | 560 | 520 | 540 | 560 | 570 |
| | Voltage resistance (clone efficiency (%) of substituted polythiophene (P) at 65 °C) | | 94.0 | 94.0 | 93.2 | 94.0 | 93.2 | 91.5 | 93.0 | 92.8 | 92.1 | 91.0 |
| | Battery output (W) | | 71.1 | 71.0 | 70.2 | 70.1 | 69.2 | 68.9 | 69.9 | 67.7 | 67.1 | 66.9 |
| | Initial capacity (mAh) | | 12.9 | 14.1 | 13.8 | 13.9 | 13.4 | 12.5 | 13.5 | 12.6 | 11.7 | 11.3 |
| | Capacity at 50th cycle (mAh) | | 12.8 | 14.0 | 13.7 | 13.8 | 13.3 | 12.4 | 13.4 | 12.5 | 11.6 | 11.2 |
| | Capacity retention rate (%) | | 99.2 | 99.3 | 99.3 | 99.3 | 99.3 | 99.2 | 99.3 | 99.2 | 99.1 | 99.1 |
| | Initial high-speed charging/ discharging capacity (mAh) | | 13.0 | 15.3 | 13.5 | 14.2 | 13.9 | 12.3 | 14.0 | 12.5 | 12.1 | 11.8 |
| | High-speed charging/ discharging capacity at 50th cycle (mAh) | | 12.6 | 14.9 | 12.9 | 13.8 | 13.3 | 11.8 | 13.5 | 12.0 | 11.6 | 11.3 |
| | Capacity retention rate upon high-speed charging/ discharging (%) | | 96.9 | 97.4 | 95.6 | 97.2 | 95.7 | 95.9 | 96.4 | 96.0 | 95.9 | 95.8 |
| | Deterioration rate of cycle characteristics upon high-speed charging/ discharging (%) | | 97.7 | 98.1 | 96.3 | 97.9 | 96.4 | 96.7 | 97.1 | 96.8 | 96.7 | 96.6 |

[Table 2]

| | | | Example 11 | Example 12 | Example 13 | Example 14 | Comparative example 1 | Comparative example 2 | Comparative example 3 | Comparative example 4 | Comparative example 5 |
|---|---|---|---|---|---|---|---|---|---|---|---|
| Blend ratio of additive components | Substituted polythiophene (P) | Type | (P2-1) | (P2-2) | (P1-1) | (P1-1) | (P'-1) | (P'-1) | (P'-2) | - | - |
| | | Usage | 5% | 5% | 3% | 6% | 100% | 5% | 5% | - | - |
| | Binding strength assisting high-molecular compound | Polyvinylidene fluoride | - | - | 47% | 44% | - | 45% | - | 50% | - |
| | | Carboxymethylcellulose | 45% | 45% | - | - | - | - | 45% | - | 50% |
| | | Polyaniline-sulfonic acid | - | - | - | - | - | - | - | - | 50% |
| | Conductive auxiliary agent | Acetylene black | 50% | 50% | 50% | 50% | - | 50% | 50% | 50% | - |
| Performance assessment | Binding strength (%) | | 97 | 97 | 99 | 99 | 96 | 98 | 97 | 99 | 69 |
| | Dispersibility of substituted polyethiophene in polyvinylidene fluoride (dispersion particle size (nm)) | | - | - | 580 | 570 | 950 | 950 | - | - | - |
| | Voltage resistance (clone efficiency (%) of substituted polythiophene (P) at 65 °C) | | 90.3 | 90.1 | 94.0 | 94.0 | 71.2 | 71.2 | 69.9 | - | - |
| | Battery output (W) | | 64.3 | 65.8 | 66.3 | 70.0 | 56.3 | 56.1 | 52.2 | 45.0 | 42.8 |
| | Initial capacity (mAh) | | 12.8 | 11.6 | 12.8 | 11.7 | 9.9 | 10.3 | 9.8 | 10.5 | 10.4 |
| | Capacity at 50th cycle (mAh) | | 12.6 | 11.5 | 12.7 | 11.6 | 9.7 | 10.2 | 9.3 | 9.6 | 7.6 |
| | Capacity retention rate (%) | | 98.4 | 99.1 | 99.2 | 99.1 | 98.0 | 98.9 | 95.3 | 91.2 | 73.1 |
| | Initial high-speed charging/ discharging capacity (mAh) | | 10.8 | 10.4 | 10.3 | 11.0 | 9.0 | 10.0 | 8.7 | 8.2 | 8.1 |
| | High-speed charging/ discharging capacity at 50th cycle (mAh) | | 10.0 | 9.6 | 9.8 | 10.4 | 7.9 | 9.2 | 7.4 | 6.6 | 5.0 |
| | Capacity retention rate upon high-speed charging/ discharging (%) | | 92.6 | 92.3 | 95.1 | 94.5 | 87.8 | 92.1 | 84.9 | 80.3 | 61.6 |
| | Deterioration rate of cycle characteristics upon high-speed charging/ discharging (%) | | 94.1 | 93.1 | 95.9 | 95.4 | 89.6 | 93.1 | 89.1 | 89.0 | 84.3 |

<Production of Cell for Evaluating Secondary Battery>

The positive electrodes for Examples 1-14 and Comparative Examples 1-5 and the negative electrode obtained in Production Example 12 were arranged at both ends within a 2032 type coil cell so as to face the applied surfaces from each other, and a cell for a secondary battery was prepared, respectively. The electrolyte solution prepared in Production Example 13 was injected into a cell and a cell for evaluation was obtained.

[Evaluation]

Results of evaluation of binding strength, dispersibility in polyvinylidene fluoride, voltage endurance, battery outputs, capacity retention rates, capacity retention rates upon high-speed charging/discharging and cycle characteristic

deterioration rates upon high-speed charging/discharging are shown in Tables 1 and 2.

<Evaluation of Binding Strength>

A surface of a positive membrane was scratched with squares (10 × 10 grids) in accordance with JIS K5400 of cross-cut adhesion test method, and a cellophane adhesive tape (manufactured by Nichiban Co., Ltd.) was adhered over it, and the number of grids remained on a positive electrode combined agent layer after peeling off was visually counted, and binding strength is calculated using the following equation:

$$\text{Binding strength (\%)} = (\text{number of remained grids} / 100) \times 100$$

<Evaluation of Dispersibility of Substituted Polythiophene (P) in Polyvinylidene Fluoride>

A slurry obtained by thoroughly kneading 1.0 parts of the additive and 7.0 parts of 1-methyl-2-pyrrolidone [manufactured by Tokyo Chemical Industry Co., Ltd.] in a mortar was applied onto an aluminum foil, and after the foil was dried in the atmosphere at 100 °C for 15 minutes, it was further dried under reduced pressure (10 mmHg) at 80 °C for 5 minutes to make a test sample. Substituted polythiophene (P) in the prepared test sample was stained with ruthenium tetraoxide in the gas phase, and the dispersed particle size of the substituted polythiophene (P) in polyvinylidene fluoride was measured using a transmission type electron microscope (TEM) (H-7100 type (model No.) manufactured by Hitachi, Ltd.). However, because the additives in Production Examples 11 and 12 and Comparative Example 3 were not dissolved into polyvinylidene fluoride, the dispersed particle size was not measured. Further, the additives in Comparative Examples 4 and 5 were not measured because no substituted polythiophene was contained.

<Evaluation of Voltage Resistance>

An electrode where 5 mg of substituted polythiophene (P) was applied onto an aluminum foil was regarded as a working electrode and a lithium foil was regarded as an opposite electrode and a reference electrode, and cyclic voltammetry (CV) was conducted at 65 °C within the voltage range of 3.0 V to 5.0 V at 1 mV/sec of sweep rate with Potentiostat/Gulvanostat (manufactured by Bio Logic Corp.) using a triode cell where an electrolytic solution was to dissolve lithium hexafluorophosphate at 1 mol/L into a solvent mixed with a ratio of ethylene carbonate: diethyl carbonate = 50: 50 (volume ratio), and a coulombic efficiency of substituted polythiophene (P) was obtained. The higher values of coulombic efficiency become, the more excellent the voltage resistance becomes.

<Evaluation of Battery Output>

After charging a battery with a charge/discharge measuring apparatus: "Battery Analyzer 1470 Type," [manufactured by TOYO Corporation] so as to adjust SOC (State of charge: a ratio of capacity at a prescribed time point to capacity in a fully charged state) at 60 %, the battery was discharged at a fixed current and voltage was read 10 seconds later. This process was conducted with at several current values; an approximate straight line was prepared by plotting current values on the X-axis and voltage values after 10 seconds on the Y-axis; a current value where the approximate straight line crosses 3 V (as indicated by $I_{3.0v}$); and then battery outputs were calculated using the following equation:

$$\text{Battery outputs (W)} = I_{3.0V} \times 3.0$$

< Evaluation of Capacity Retention Rate >

A battery was charged from 0 V to 2 V of voltage with 0.2 mA/cm$^2$ of electric current using the charge/discharge measuring apparatus: "Battery Analyzer 1470 Type,", and after 10 minutes of pausing, the battery was discharged to 0 V of battery voltage with 0.2 mA/cm$^2$ of electric current, and this process of charge/discharge were repeated 50 cycles. Battery capacity at the initial charging and battery capacity at the 50$^{th}$ cycle of charging were measured, and a capacity retention rates was calculated from an equation below. The larger the values become, the more excellent the charge/discharge cycle characteristics become.

$$\text{Capacity retention rate (\%)} = \text{(battery capacity when charged at the } 50^{th} \text{ cycle)} / \text{(battery capacity at the initial charge)} \times 100$$

<Evaluation of Capacity Retention Rate during High-speed Charging/Discharging>

A battery was charged from 0 V to 2 V of voltage with 0.5 mA/cm$^2$ of electric current using the charge/discharge measuring apparatus: "Battery Analyzer 1470 Type," and after 10 minutes of pausing, the battery was discharged to 0 V of battery voltage with 0.5 mA/cm$^2$ of electric current, and this process to charge/discharge was repeated.
Battery capacity at the initial charging and battery capacity at the 50$^{th}$ cycle of charging were measured, and capacity retention rates at high-speed charge/discharge were calculated using equation below. The larger the values become, the more excellent the charge/discharge cycle characteristics become.

$$\text{Capacity retention rate during high-speed charge/discharge (\%)} = \text{(battery capacity when charged at the } 50^{th} \text{ cycle)} / \text{(battery capacity at the initial charge)} \times 100$$

<Evaluation of Cycle Characteristics Deterioration Rate during High-speed Charge/Discharge>

Cycle characteristic deterioration rates at high-rate charge/discharge were calculated using the formula below. The larger the values become, the more excellent the cycle characteristics at high-speed charge/discharge without any deterioration compared to that at ordinary charging/discharging.

$$\text{Cycle characteristic deterioration rate during high-speed charge/discharge (\%)} = \text{(capacity retention rate during high-rate charge/discharge)} / \text{(capacity retention rate)} \times 100$$

Tables 1 and 2 show that the additive in Example 1 is higher at the outputs of a battery, excels in output characteristics and shows better cycle characteristics even at high-speed charging/discharging compared to the additive in Comparative Example 1.
They also show that the additive in Examples 4-10, 13 and 14 are higher at the outputs of a battery, excels in output characteristics and show better cycle characteristics at high-speed charging/discharging compared to the additive in Comparative Example 2.
In the case of using polyvinylidene fluoride in an additive for positive electrodes, they show that the additives in Examples 4-10, 13 and 14 are better in the dispersibility of the substituted polythiophene (P) in polyvinylidene fluoride compared to the additive in Comparative Example 2.
They also show that the additives in Examples 11 and 12 are higher at the outputs of a battery, excel in output characteristics and show better cycle characteristics at high-speed charging/discharging compared to the additive in Comparative Example 3.
These tables show that the binding strength of a coating applied onto the surface of electrolytic aluminum foil is strong enough to be used with the additives for positive electrodes according to the present invention, and positive electrodes using these additives for positive electrodes excel in the output characteristics, as well as excellent cycle characteristics even at high-speed charging/discharging.

Industrial Field of Application:

Since the additive for positive electrodes of a lithium ion secondary battery according to the present invention excels in electron conductivity and ion conductivity, it is also useful as an additive for batteries other than the lithium ion secondary battery. Further, since a lithium ion secondary battery using the additive according to the present invention excels in outputs and safety, it is useful as a battery for electric cars.

## Claims

1. An additive for positive electrodes of a lithium secondary battery comprising a substituted polythiophene (P), as an essential component, having thiophene repeating units (D) where a hydrogen atom(s) at the 3-position and/or the 4-position of a thiophene ring is/are substituted at least one group (f) selected from a group consisting of groups (f1) through (f4) represented by the following formulae (1) through (4) respectively, as a portion of the thiophene repeating units:

$-OR^1-R^2$ (1)

[wherein: $R^1$ represents a $C_{1-6}$ alkylene group; and $R^2$ represents a $C_{1-15}$ perfluoroalkyl group);

$-O-R^3$ (2)

[wherein $R^3$ represents a $C_{1-15}$ perfluoroalkyl group];

$-R^4-O-R^5$ (3)

[wherein: $R^4$ represents a straight or branched $C_{1-6}$ alkylene group; and $R^5$ represents $C_{1-15}$ perfluoroalkyl group]; and

$-R^6-OR^7-R^8$ (4)

[wherein: $R^6$ represents a straight or branched $C_{1-6}$ alkylene; $R^7$ represents a $C_{1-6}$ alkylene group; and $R^8$ represents a $C_{1-15}$ perfluoroalkyl group].

2. The additive according to claim 1, wherein
the thiophene repeating unit (D) is at least one type of repeating unit selected from a group consisting of repeating units (D1) through (D4) represented by the following general formulae (5) through (8), respectively:

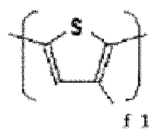
(5)

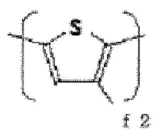
(6)

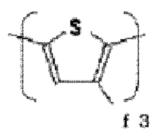
(7)

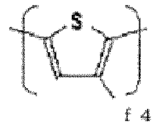
(8)

**3.** The additive according to claim 1 or 2, wherein
the repeating unit (D) is a repeating unit substituted by at least one type of group selected from a group constituting 2,2,2,-trifiuoroethoxy group,2,2,3,3,3-pentafluoropropoxy group,2,2,3,3,4,4,4-heptafluorobutoxy group, 2,2,3,3,4,4,5,5,5-nonafluoropentoxy group, 3,3,3-trifluoro-1-propoxy group, 4,4,4-trifluoro-1-butoxy group and 5,5,5-trifluro-1-pentoxy group.

**4.** The additive according to any one of claims 1 to 3, wherein
a content of the repeating unit (D) is 50 to 100 molar percentages based upon weight of the substituted polythiophene (P).

**5.** The additive according to any one of claims 1 to 4, wherein
a group represented by the following general formula is bound at the 3-position or the 4-position of one or more thiophene rings in the substituted polythiophene (P):

$$-SO_3^- M^+ \qquad (9)$$

[wherein, $M^+$ is an alkali metal cation or proton].

**6.** The additive according to any one of claims 1 to 5, wherein
regioregularity defined by the percentage of head-to-tail-head-to-tail bonds of the substituted polythiophene (P) is 90 % or higher.

**7.** The additive according to any one of claims 1 to 6, further comprising polyvinylidene fluoride and/or polytetrafluoroethylene.

**8.** The additive according to any one of claims 1 to 6, further comprising arboxymethylcellulose.

**9.** Positive electrodes for a lithium secondary battery, comprising the additive according to any one of claims 1 to 8, an active material (B) and a collector (C).

**10.** A lithium secondary battery using positive electrodes comprising the additive according to any one of claims 1 to 8.

**INTERNATIONAL SEARCH REPORT**

International application No.
PCT/JP2012/050484

A. CLASSIFICATION OF SUBJECT MATTER
*H01M4/62*(2006.01)i

According to International Patent Classification (IPC) or to both national classification and IPC

B. FIELDS SEARCHED

Minimum documentation searched (classification system followed by classification symbols)
H01M4/62

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 2010-257954 A (Sanyo Chemical Industries, Ltd.), 11 November 2010 (11.11.2010), entire text & WO 2010/113876 A1 | 1-10 |
| A | JP 2007-250993 A (Kaneka Corp.), 27 September 2007 (27.09.2007), entire text (Family: none) | 1-10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
27 March, 2012 (27.03.12)

Date of mailing of the international search report
03 April, 2012 (03.04.12)

Name and mailing address of the ISA/
Japanese Patent Office

Facsimile No.

Authorized officer

Telephone No.

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007052940 A
- JP 2010135310 A